# EUROPÄISCHE PATENTSCHRIFT

(11) **EP 0 569 373 B1**
(45) Veröffentlichungstag und Bekanntmachung des Hinweises auf die Patenterteilung: **22.06.1994**
(21) Anmeldenummer: 92901279.7
(22) Anmeldetag: 21.12.1991
(51) Int. Cl.: B65G 7/00, B65G 29/00, B65G 49/05, B65G 49/08

(54) **TRANSPORTVORRICHTUNG**
CONVEYOR DEVICE
DISPOSITIF DE TRANSPORT

(30) Priorität: 29.01.1991 DE 4102568
(43) Veröffentlichungstag der Anmeldung: 18.11.1993
(73) Patentinhaber: Adolf Hottinger Maschinenbau GmbH, D-68219 Mannheim (DE)
(72) Erfinder: LANDUA, Werner, D-6800 Mannheim 81 (DE); ROMMEL, Reiner, D-6835 Brühl (DE); MÜLLER, Jürgen, D-6800 Mannheim 81 (DE)
(74) Vertreter: Naumann, Ulrich, Dr.-Ing.
(86) Internationale Anmeldenummer: DE9101012
(87) Internationale Veröffentlichungsnummer: WO9212916

(56) Entgegenhaltungen:
- DE-A- 2 211 850
- DE-A- 3 138 954
- DE-A- 3 142 279
- DE-A- 3 336 068
- DE-A- 3 545 675
- DE-A- 3 624 554

## Beschreibung

Die Erfindung betrifft eine Transportvorrichtung, vorzugsweise zum Transport von Werkstücken zwischen Bearbeitungsstationen, gemäß dem Oberbegriff des Anspruchs 1. Eine solcher Vorrichtung ist aus dem Dokument DE-A-3 336 068 bekannt.

Transportvorrichtungen der in Rede stehenden Art sind aus der Praxis seit Jahren bekannt. Um nachfolgend die diesen Transportvorrichtungen bislang anhaftende Problematik aufzuzeigen, wird fortan auf die Gießereitechnik Bezug genommen, auf die jedoch die Lehre der vorliegenden Erfindung nicht beschränkt ist.

In der Gießereitechnik, insbesondere zum Gießen von Formstücken, werden Kerne oder Formen meist in getrennten Teilen hergestellt, zusammengeführt und miteinander verbunden. Danach werden die miteinander verbundenen Kerne - einzeln - in eine Schwärzeeinrichtung verbracht, in dem die Kerne nach unten hängend in eine Tauchstation geführt werden. Dazu werden die Kerne meist durch Anheben eines mit Schwärze gefüllten Beckens geflutet. Schließlich muß die überflüssige Schwärze von den Kernen abtropfen, wobei diese an einer Übergabestation, beispielsweise zum Trocknen in Trockenöfen, an eine weitere Transporteinrichtung übergeben werden.

Die Transportvorrichtungen zum Verbringen der Gießereikerne an die jeweiligen Bearbeitungsstationen sind jedoch in der Praxis insoweit problematisch, als diese Transportvorrichtungen einerseits nur eine bestimmte Taktgeschwindigkeit zulassen, andererseits aufgrund der meist linearen Anordnung der Bearbeitungsstationen einen erheblichen Raumbedarf aufweisen.

Der Erfindung liegt daher die Aufgabe zugrunde, die eingangs genannte Transportvorrichtung so auszugestalten und weiterzubilden, daß mit dieser Vorrichtung eine schnelle Taktfolge bei geringem Raumbedarf realisierbar ist. Diese Transportvorrichtung soll sich besonders für die Behandlung von Gießereikernen und -formen eignen.

Die erfindungsgemäße Transportvorrichtung löst die voranstehende Aufgabe durch die Merkmale des Patentanspruches 1. Danach ist die eingangs genannte Transportvorrichtung so ausgestaltet und weitergebildet, daß die Halteeinrichtung um eine vertikale Achse kontinuierlich drehbar ist, so daß das Halteelement eine im wesentlichen kreisbogenförmige Bahn beschreibt.

Erfindungsgemäß ist zunächst erkannt worden, daß die Bearbeitungsstationen einerseits zur Verringerung der Transportwege, andererseits zur Reduzierung des Raumbedarfs insgesamt kreisförmig anzuordnen sind. Entsprechend läßt sich die Halteeinrichtung um eine vertikale Achse kontinuierlich drehen, so daß das Halteelement eine im wesentlichen kreisbogenförmige Bahn beschreibt, auf der die einzelnen Bearbeitungsstationen, also beispielsweise die Schwärzeeinrichtung und der Abtropfbereich, angeordnet sind.

Die zum Halten des Werkstückes dienende Halteeinrichtung läßt sich auch um eine horizontale Achse drehen. Eine solche Drehung ist vorzugsweise im Bereich bis zum 180° realisierbar. Ebenso wäre es denkbar, daß die Halteeinrichtung um 360° bzw. endlos horizontal drehbar bzw. schwenkbar ausgeführt ist, wodurch sich ein Zurückdrehen bzw. ein Zurückschwenken der Halteeinrichtung erübrigt.

Geht man davon aus, daß das zu bearbeitende Werkstück von außerhalb der Transportvorrichtung auf die Halteeinrichtung aufgesetzt und dort arretiert wird, so läßt sich das Werkstück über die horizontale Verschwenkung nach unten abkippen. Entsprechend läßt sich das Halteelement in jeder horizontalen Lage der Halteeinrichtung von einer aufwärts gerichteten Position in eine abwärts gerichtete Position schwenken.

Damit nun gleichzeitig mehrere Werkstücke bearbeitet bzw. transportiert werden können, sind in weiter vorteilhafter Weise mindestens zwei Halteeinrichtungen vorgesehen, wobei die Halteeinrichtungen einander gegenüberliegend mit gleichen Abständen zur vertikalen Drehachse angeordnet sind. Selbstverständlich können mehrere Drehachsen sternförmig um die vertikale Drehachse angeordnet sein, wobei die Halteeinrichtungen bereits aus statischen Gründen gleiche Abstände zueinander aufweisen sollten.

Da zum sicheren Halten eines Werkstückes ein einzelnes, der Halteeinrichtung zugeordnetes Halteelement meist nicht ausreicht, sind in vorteilhafter Weise je Halteeinrichtung mindestens zwei, vorzugsweise mehrere, Halteelemente vorgesehen. Die Ausgestaltung dieser Halteelemente wird später noch genauer erörtert werden.

Die um eine vertikale Achse verlaufende Drehbewegungung und/oder die um eine horizontale Achse verlaufende Schwenkbewegung der Halteeinrichtung kann jeweils mittels eines elektrischen Antriebsmotors erfolgen. Dazu könnten beispielsweise Stellmotoren eingesetzt werden. In besonders vorteilhafter Weise könnte die Drehbewegung und/oder die Schwenkbewegung der Halteeinrichtung aber auch mittels eines hydraulischen oder pneumatischen Antriebs erfolgen. Entsprechend könnte dann einerseits die Halteeinrichtung hinsichtlich der Drehung um eine vertikale Achse, andererseits die Halteelemente hinsichtlich einer Schwenkbewegung um eine horizontale Achse mittels eines Drehverteilers für das Druckmedium direkt oder indirekt am Maschinenständer angelenkt sein. Über einen solchen aus dem Stand der Technik für sich bekannten Drehverteiler läßt sich das Druckmedium verlustfrei an die jeweiligen Wirkpositionen verbringen.

Die zum Halten des Werkstückes dienenden Halteelemente selbst könnten ebenso hydraulisch oder pneumatisch betätigbar ausgeführt sein. Die Versorgung der Halteelemente mit Druckmedium geschieht dann ebenfalls über für sich bekannte Drehverteiler. In besonders vorteilhafter Weise lassen sich die Halteelemente über ein Steuermittel steuern, das vorzugsweise drehpositionsabhängig arbeitet. Mit anderen Worten werden die Halteelemente in Abhängigkeit von der horizontalen Position der Betätigungseinrichtung aktiviert bzw. deaktiviert. Das zur Betätigung dienende Steuermittel könnte in besonders vorteilhafter Weise als ortsfeste Nockenscheibe ausgeführt sein. Diese Nockenscheibe könnte dann - je Halteeinrichtung - direkt ein hydraulisches oder pneumatisches Ventil betätigen. Ebenso könnte aber auch die Nockenwelle bzw. das Steuermittel gemeinsam mit der Halteeinrichtung drehen, wobei dann das hydraulische oder pneumatische Ventil entsprechend ortsfest angeordnet sein müßte. Beide zuvor genannten Anordnungen sind grundsätzlich möglich.

Hinsichtlich der Anordnung der Halteelemente ist es von weiterem Vorteil, wenn die Halteelemente auf einer Führung bzw. Verstellwelle oder dgl. über eine dem Maschinenständer zugeordnete Spindel horizontal gegeneinander verstellbar ausgeführt sind. Abgesehen von dieser linearen Verstellung könnten die Halteelemente auch auf einer Führung bzw. Verstellwelle oder dgl. verstellbar sein, wobei die Lage der Führung bzw. Verstellwelle orthogonal zu deren Verstellrichtung ggf. über eine weitere Führung bzw. Verstellwelle änderbar wäre. Insgesamt ließen sich die Halteelemente dann im Sinne einer X-Y-Koordinatensteuerung horizontal in allen Richtungen - beliebig - gegeneinander verstellen.

Die Spindel zum Verstellen der Führung bzw. Verstellwelle könnte insbesondere unter dem Gesichtspunkt einer einfachen Konstruktion über ein Handrad oder dgl. manuell betätigbar sein. Ebenso könnte die Spindel auch über eine NC-Steuerung mittels eines Stellmotors oder dgl. betätigbar sein.

Damit nun die Einstellung bzw. Verstellung der Halteelemente durch Betätigen der Spindel oder dgl. mit einfachen konstruktiven Mitteln erfolgen kann, geschieht die Verstellung - quasi selbsttätig - über eine der Spindel zugeordnete, mit einem Eingriffsmittel des Halteelements in Eingriff bringbare Kulisse. Diese Kulisse bzw. die die Kulisse tragende Spindel ist zur sicheren Abstimmung der Position der Halteelemente auf das zu transportierende Werkstück dort dem Maschinenständer ortsfest zugeordnet, wo das Werkstück mit der Halteeinrichtung in Eingriff bringbar ist. Ist dieser Eingriff einmal bewerkstelligt, so kann sich die Lage der Halteelemente zueinander zwangsweise nicht mehr verändern, so daß eine weitere Führung oder Kontrolle der Position der Halteelemente im Verlaufe des Transports nicht mehr erforderlich ist.

Hinsichtlich einer besonderen Verwendung der erfindungsgemäßen Transportvorrichtung sind die Halteelemente als Lochgreifer ausgeführt. Der Begriff Lochgreifer ist hier derart zu verstehen, daß die Halteelemente in eine Ausnehmung oder dgl. des zu transportierenden bzw. zu bearbeitenden Werkstückes eingeführt werden bzw. daß das Werkstück entsprechend auf die Halteeinrichtung mit den Halteelementen aufgesetzt wird, wobei die Lochgreifer in den Ausnehmungen sicher festsetzbar sind. Dazu weist der Lochgreifer in besonders vorteilhafter Weise eine sich vorzugsweise zum freien Ende hin konisch verjüngende elastische Wandung auf, dessen Durchmesser beim Betätigen der Halteelemente hydraulisch oder pneumatisch vergrößert wird. Entsprechend sollte der Durchmesser der Lochgreifer bereits vor dem Eingriff in etwa zu den Ausnehmungen des zu transportierenden Werkstückes passen.

Die erforderliche Elastizität der Wandung des Lochgreifers wird in vorteilhafter Weise dadurch erreicht, daß die elastische Wandung aus Gummi hergestellt ist, wobei innerhalb des Druckgreifers Druckmedium in eine Expansionskammer strömen kann, die direkt oder indirekt durch die elastische Wandung gebildet ist. Folglich dehnt sich der Lochgreifer beim Einströmen von Druckmedium aus, die Außenwandung des Lochgreifers legt sich an die Innenwandung der Ausnehmung des zu transportierenden Werkstückes, so daß der Lochgreifer innerhalb dieser Ausnehmung festgelegt ist.

Damit mit der erfindungsgemäßen Vorrichtung nicht nur in einem kreisförmigen Bereich transportiert werden kann, läßt sich in besonders vorteilhafter Weise der Maschinenständer selbst horizontal verfahren. Somit können mit der erfindungsgemäßen Transportvorrichtung mehrere "technologische Nester" angefahren werden, wobei jedes dieser "technologischen Nester" mehrere kreisringförmig angeordnete Bearbeitungsstationen gemäß voranstehender Beschreibung aufweist. Dabei wäre es durchaus möglich, daß mehrere jeweils einen Maschinenständer und entsprechende Halteeinrichtungen aufweisende Transportvorrichtungen hintereinander angeordnet und dabei quasi verkettet sind.

Schließlich läßt sich die erfindungsgemäße Transportvorrichtung in besonders vorteilhafter Weise im Rahmen der Bearbeitung von Gießereikernen bzw. -formen einsetzen. Dabei dienen die Lochgreifer zum Eingriff in entsprechende Ausnehmungen in den Gießereikernen und -formen, insbesondere in Sohlen- und Wassermantelkernen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung anhand der Zeichnung werden auch im allgemeinen bevorzugte Ausgestaltungen und Weiterbildungen der Lehre erläutert. In der Zeichnung zeigt
- Fig. 1: in schematischer Darstellung, teilweise geschnitten und weggebrochen, ein Ausführungsbeispiel einer erfindungsgemäßen Tansportvorrichtung und
- Fig. 2: in schematischer Darstellung, vergrößert, einen Lochgreifer der in Fig. 1 dargestellten Transportvorrichtung.

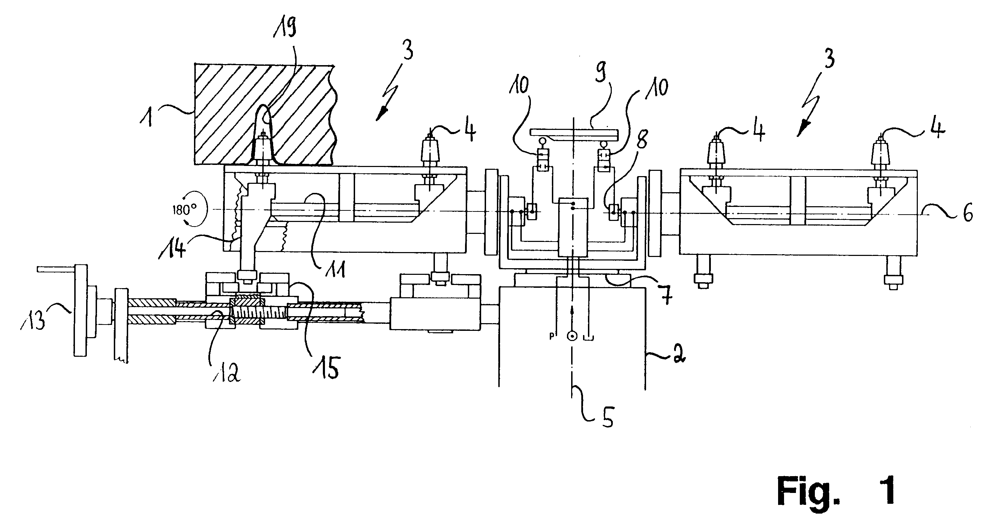

Fig. 1 zeigt eine Transportvorrichtung zum Transport von Werkstücken 1 zwischen hier nicht gezeigten Bearbeitungsstationen. Bei diesen Werkstücken handelt es sich im Rahmen des hier gewählten Ausführungsbeispiels um Gießereikerne. Die Transportvorrichtung weist einen Maschinenständer 2 und zwei, vom Maschinenständer 2 getragene, das Werkstück 1 aufnehmende Halteeinrichtungen 3 auf. Jede der Halteeinrichtungen 3 weist wiederum zwei in der Figur sichtbare, mit dem Werkstück 1 in Eingriff bringbare Halteelemente 4 auf, wobei die Zahl der Haltelemente 4 entsprechend der Geometrie und Größe des zu transportierenden Werkstückes variabel ist.

Erfindungsgemäß ist die Halteeinrichtung 3 um eine vertikale Achse 5 kontinuierlich drehbar, so daß die Halteelemente 4 beim Drehen der Halteeinrichtung 3 eine im wesentlichen kreisbogenförmige Bahn beschreiben.

Die Halteeinrichtung 3 ist des weiteren um eine horizontale Achse 6 um 180° drehbar, so daß die Halteelemente 4 in jeder horizontalen Lage der Halteeinrichtung 3 von einer aufwärts gerichteten Position in eine abwärts gerichtete Position schwenkbar sind. Fig. 1 zeigt des weiteren deutlich, daß die Halteeinrichtungen 3 einander gegenüberliegend mit etwa gleichen Abständen zur vertikalen Drehachse 5 angeordnet sind.

Die Drehbewegung bzw. Schwenkbewegung der Halteeinrichtungen 3 erfolgt jeweils mittels eines hydraulischen Antriebs. Zur Realisierung dieses hydraulischen Antriebs ist die Halteeinrichtung einerseits hinsichtlich der Drehung um die vertikale Achse 5, andererseits hinsichtlich der Schwenkbewegung um die horizontale Achse 6 jeweils mittels eines Druckverteilers 7, 8 für das Druckmedium direkt oder indirekt am Maschinenständer 2 angelenkt.

Die Betätigung der Halteelemente 4 selbst erfolgt bei dem hier bevorzugten Ausführungsbeispiel pneumatisch. Die Versorgung der Halteelemente 4 mit Druckmedium erfolgt dabei ebenfalls über die Druckverteiler 7, 8. Zur Aktivierung bzw. Deaktivierung der Halteelemente 4 ist ein Steuermittel 9 vorgesehen, das die Halteelemente 4 drehpositionsabhängig, d.h. in Abhängigkeit von der horizontalen Position der Halteeinrichtung 3, betätigt.

Bei dem in Fig. 1 dargestellten Ausführungsbeispiel ist das Steuermittel 9 als ortsfeste Nockenscheibe ausgeführt. Die Nockenscheibe betätigt direkt ein pneumatisches Ventil 10, wobei die Darstellung der Fig. 1 so gewählt ist, daß das auf der linken Seite dargestellte Ventil 10 die auf der linken Seite angeordneten Halteelemente 4 deaktiviert und das auf der rechten Seite dargestellte Ventil 10 die auf der rechten Seite angeordneten Halteelemente 4 aktiviert.

Fig. 1 zeigt des weiteren, daß die Halteelemente 4 auf einer Verstellwelle 11 über eine dem Maschinenständer 2 zugeordnete - ortsfeste - Spindel 12 horizontal gegeneinander vestellbar sind. Eine Verstellung senkrecht zur Zeichenblattebene ist möglich, in der Figur jedoch nicht enthalten. Die Spindel 12 läßt sich über ein Handrad 13 manuell betätigen. Ebenso ist eine Betätigung über eine NC-Steuerung, beispielsweise mittels eines Stellmotors, möglich.

Den Halteelementen 4 sind des weiteren Eingriffsmittel 14 zugeordnet. Diese Eingriffsmittel 14 sind mit jeweils einer Kulisse 15 in Eingriff bringbar, so daß die Verstellung bzw. Einstellung der Halteelemente 4 - quasi selbsttätig - über die der Spindel 12 zugeordnete und entlang der Spindel 12 verstellbare Kulissen 15 möglich ist. Dabei ist wesentlich, daß die Kulisse 15 bzw. die die Kulisse 15 tragende Spindel 12 dort dem Maschinenständer 2 zugeordnet ist, wo das Werkstück 1 mit der Halteeinrichtung 3 in Eingriff gebracht wird. Genau dort ist nämlich die genaue Ausrichtung der Halteelemente 4 nur erforderlich, so daß ein Aufsetzen des Werkstückes 1 auf die Halteeinrichtung 3 problemlos und ohne Beschädigung des Werkstücks 1 möglich ist. Im weiteren Verlauf des Transports kann sich die Position der Halteelemente 4 zueinander aufgrund des aufgesetzten Werkstückes 1 nicht mehr ändern, eine weiteren Kulissenführung ist daher nicht mehr erforderlich.

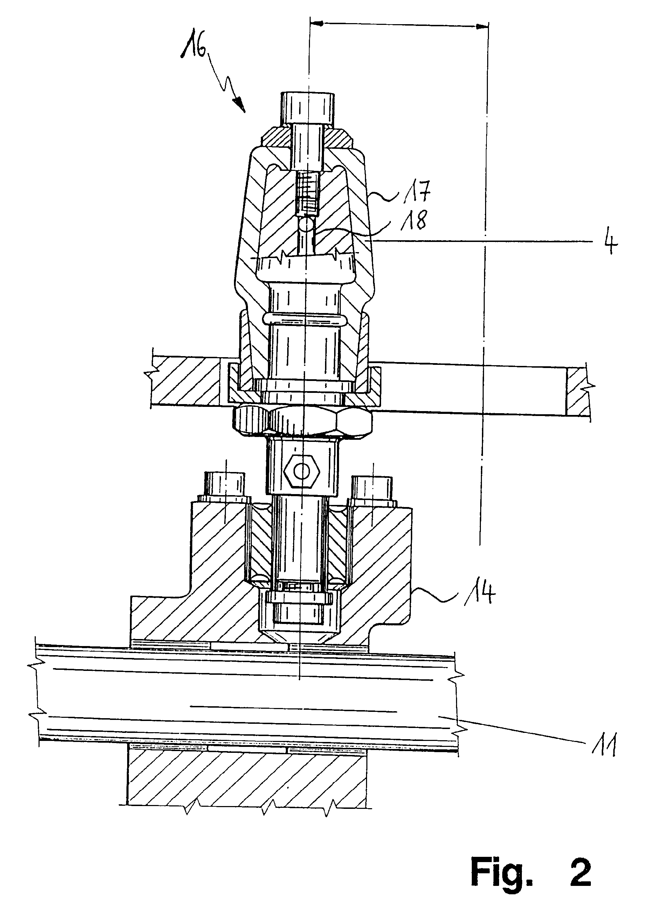

Fig. 2 zeigt nun besonders deutlich, daß die Halteelemente 4 als Lochgreifer ausgeführt sind. Ein solches Halteelement bzw. ein solcher Lochgreifer 4 weist eine sich zum freien Ende 16 hin konisch verjüngende elastische Wandung 17 auf, dessen Durchmesser beim Betätigen hydraulisch vergrößert wird. Entsprechend ist innerhalb des Lochgreifers 4 eine Druckkammer 18 ausgebildet.

Nachfolgend wird kurz darauf Bezug genommen, daß die als Lochgreifer 4 ausgebildeten Halteelemente in besonders vorteilhafter Weise zum Eingriff in entsprechende Ausnehmungen 19 in Gießereikernen und -formen, insbesondere in Sohlen- und Wassermantelkernen, dienen. Zur Verdeutlichung eines solchen besonders vorteilhaften Einsatzes der erfindungsgemäßen Transportvorrichtung im Rahmen der Behandlung von Gießereikernen wird nachfolgend ein möglicher Bearbeitungsablauf kurz beschrieben:

Die miteinander verbundenen Werkstücke 1 bzw. Kerne werden mit einer in den Figuren nicht dargestellten Greifer- und Transportvorrichtung von einer Verbindungsstation - zum Verbinden einzelner Kernteile - zu einer "Aufgabestation" einer ebenfalls nicht gezeigten Schwärzemaschine gebracht und dort auf die Halteeinrichtung 3 bzw. die dort ausgebildeten Lochgreifer 4 aufgesteckt. Danach wird die Transportvorrichtung bzw. werden die Halteeinrichtungen 3 um einen Takt gedreht. Entsprechend der Ausgestaltung und Anordnung der zur Steuerung der Lochgreifer 4 dienenden Nockenscheibe 9 werden die Lochgreifer 4 aktiviert bzw. deaktiviert. Bei aktivierten Lochgreifern 4 sind die Wandungen 17 der Lochgreifer 4 an die Innenwandungen der Ausnehmungen 19 der Kerne gepreßt, so daß diese sicher um die horizontale Achse 6 nach unten abgekippt werden können. In dieser abgekippten Position lassen sich die Kerne in der Tauchstation - beispielsweise durch Anheben eines mit Schwärze gefüllten Beckens - in das Schwärzebad verbringen.

Im Verlauf der weiteren Taktstrecken kann die überflüssige Schwärze in ein ebenfalls nicht gezeigtes Becken abtropfen. An einer "Übergabestation" steuert die Nockenscheibe 9 die Lochgreifer 4 in einen "luftlosen" Zustand, so daß die auf der entsprechenden Halteeinrichtung 3 sitzende Kerngruppe beispielsweise mit einem weiteren Greif- und Transportgerät zu Trockenöfen gebracht werden kann.

Fig. 1 läßt dabei deutlich erkennen, daß sich die Positionen der Lochgreifer 4 beim Durchlaufen der Kulisse 15 automatisch auf die über die Spindel 12 eingestellte Position der Kulisse 15 - selbsttätig - einstellen.

Abschließend sei hervorgehoben, daß der Kern der vorliegenden Erfindung - Realisierung einer schnelleren Taktfolge bei geringerem Platzbedarf - auch bei anderen Anwendungsfällen bzw. Bearbeitungsstationen realisisert werden kann. Das voranstehend lediglich beispielhaft genannte Behandeln von Gießereikernen und -formen dient lediglich dem Verständnis der erfindungsgemäßen Lehre, schränkt diese jedoch nicht ein.

## Patentansprüche

1. Vorrichtung zur Handhabung von Gießereikernen und -formen (1), mit einem Maschinenständer (2) und mindestens einer vom Maschinenständer (2) getragenen, den Gießereikern (1) aufnehmenden Halteeinrichtung (3), wobei die Halteeinrichtung (3) wiederum mindestens ein mit dem Gießereikern (1) in Eingriff bringbares Halteelement (4) aufweist,
**dadurch gekennzeichnet,** daß die Halteeinrichtung (3) um eine vertikale Achse (5) kontinuierlich drehbar ist, so daß das Halteelement (4) eine im wesentlichen kreisbogenförmige Bahn beschreibt und daß die Halteeinrichtung (3) um eine horizontale Achse (6), vorzugsweise um 180°, drehbar ist, so daß das Halteelement (4) in jeder horizontalen Lage von einer aufwärts gerichteten Position in eine abwärts gerichtete Position schwenkbar ist.

2. Vorrichtung nach Anspruch 1, dadurch gekennzeichnet, daß mindestens zwei Halteeinrichtungen (3) vorgesehen sind und daß die Halteeinrichtungen (3) einander gegenüberliegend mit gleichen Abständen zur vertikalen Drehachse angeordnet sind.

3. Vorrichtung nach einem Anspruch 1 oder 2, dadurch gekennzeichnet, daß jede Halteeinrichtung (3) mindestens zwei, vorzugsweise mehrere, Halteelemente (4) aufweist.

4. Vorrichtung nach einem der Ansprüche 1 bis 3, dadurch gekennzeichnet, daß die Drehbewegung und/oder die Schwenkbewegung der Halteeinrichtung (3) jeweils mittels eines elektrischen Antriebsmotors erfolgt.

5. Vorrichtung nach einem der Ansprüche 1 bis 3, dadurch gekennzeichnet, daß die Drehbewegung und/oder die Schwenkbewegung der Halteeinrichtung (3) jeweils mittels eines hydraulischen Antriebs erfolgt, wobei einerseits die Halteeinrichtung (3) hinsichtlich der Drehung um eine vertikale Achse (5) und andererseits die Halteelemente (4) hinsichtlich einer Schwenkbewegung um eine horizontale Achse (6) vorzugsweise mittels eines Drehverteilers (7, 8) für das Druckmedium direkt oder indirekt am Maschinenständer (2) angelenkt sind.

6. Vorrichtung nach einem der Ansprüche 1 bis 5, dadurch gekennzeichnet, daß die Halteelemente (4) zum Halten des Werkstückes (1) pneumatisch oder hydraulisch betätigbar sind, daß Versorgung der Halteelemente (4) mit Druckmedium ebenfalls über die Drehverteiler (7, 8) erfolgt und daß die Halteelemente (4) über ein Steuermittel (9) vorzugsweise drehpositionsabhängig gesteuert sind.

7. Vorrichtung nach Anspruch 6, dadurch gekennzeichnet, daß das Steuermittel (9) als ortsfeste Nockenscheibe ausgeführt ist und daß die Nockenscheibe (9) direkt ein hydraulisches oder pneumatisches Ventil (10) betätigt.

8. Vorrichtung nach einem der Ansprüche 1 bis 7, dadurch gekennzeichnet, daß die Halteelemente (4) auf einer Verstellwelle (11) oder dgl. über eine dem Maschinenständer (2) zugeordnete Spindel (12) horizontal gegeneinander verstellbar sind.

9. Vorrichtung nach einem der Ansprüche 1 bis 7, dadurch gekennzeichnet, daß die Halteelemente (4) auf einer Verstellwelle (11), deren Lage orthogonal zu deren Verstellrichtung ggf. über eine weitere Verstellwelle (11) änderbar ist, im Sinne einer X-Y-Koordinatensteuerung horizontal gegeneinander verstellbar sind.

10. Vorrichtung nach Anspruch 8 oder 9, dadurch gekennzeichnet, daß die Spindel (12) über ein Handrad (13) oder dgl. manuell oder vorzugsweise über eine NC-Steuerung mittels eines Stellmotors betätigbar ist.

11. Vorrichtung nach einem der Ansprüche 8 bis 12, dadurch gekennzeichnet, daß die Verstellung - quasi selbsttätig - über eine der Spindel (12) zugeordnete, mit einem Eingriffsmittel (14) des Halteelements (4) in Eingriff bringbare Kulisse (15) erfolgt und daß die Kulisse (15) bzw. die die Kulisse (15) tragende Spindel (12) dort dem Maschinenständer (2) zugeordnet ist, wo das Werkstück (1) mit der Halteeinrichtung (3) in Eingriff bringbar ist.

12. Vorrichtung nach einem der Ansprüche 1 bis 11, dadurch gekennzeichnet, daß die Halteelemente (4) als Lochgreifer (4) ausgeführt sind.

13. Vorrichtung nach Anspruch 12, dadurch gekennzeichnet, daß der Lochgreifer (4) eine sich vorzugsweise zum freien Ende (16) hin konisch verjüngende, vorzugsweise aus Gummi bestehende elastische Wandung (17) aufweist, dessen Durchmesser beim Betätigen hydraulisch oder pneumatisch vergrößert wird.

14. Vorrichtung nach einem der Ansprüche 1 bis 20, dadurch gekennzeichnet, daß der Maschinenständer (2) horizontal verfahrbar ausgeführt ist.

15. Vorrichtung nach Anspruch 12 und ggf. nach Anspruch 13 oder 14, dadurch gekennzeichnet, daß die Lochgreifer (4) zum Eingriff in entsprechende Ausnehmungen (19) in Gießereikerne und -formen, insbesondere in Sohlen- und Wassermantelkerne, dienen.

## Claims

1. Device for handling foundry cores and moulds (1), having an upright (2) and at least one holding device (3) which is supported by the upright (2) and receives the foundry cores (1), the holding device (3) in turn comprising at least one holding element (4) which can be brought into engagement with the foundry core (1), characterised in that the holding device (3) is continually rotatable about a vertical axis (5) such that the holding element (4) describes a substantially circular path; and in that the holding device (3) is rotatable about a horizontal axis (6), preferably through 180°, such that the holding element (4) can be pivoted from an upwardly directed position into a downwardly directed position in any horizontal position.

2. Device according to Claim 1, characterised in that at least two holding devices (3) are provided; and in that the holding devices (3) are disposed opposite one another at the same distances relative to the vertical axis of rotation.

3. Device according to Claim 1 or Claim 2, characterised in that each holding device (3) comprises at least two, and preferably a plurality of, holding elements (4).

4. Device according to any one of Claims 1 to 3, characterised in that the rotational movement and/or the pivoting movement of the holding device (3) is in each case brought about by means of an electric drive motor.

5. Device according to any one of Claims 1 to 3, characterised in that the rotational movement and/or the pivoting movement of the holding device (3) is in each case brought about by means of a hydraulic drive, firstly the holding device (3) with respect to the rotation about a vertical axis (5) and secondly the holding elements (4) with respect to a pivoting movement about a horizontal axis (6) being articulated directly or indirectly on the upright (2) preferably by means of a rotary distributor (7, 8) for the pressure medium.

6. Device according to any one of Claims 1 to 5, characterised in that the holding elements (4) can be actuated pneumatically or hydraulically in order to hold the workpiece (1); in that the holding elements (4) are supplied with pressure medium likewise via the rotary distributor (7, 8); and in that the holding elements (4) are controlled by a control means (9) preferably such that they are dependent on the rotational position.

7. Device according to Claim 6, characterised in that the control means (9) are in the form of a fixed cam plate; and in that the cam plate (9) actuates directly a hydraulic or pneumatic valve (10).

8. Device according to any one of Claims 1 to 7, characterised in that the holding elements (4) are horizontally adjustable relative to one another on an adjustment shaft (11) or the like by means of a spindle (12) associated with the upright (2).

9. Device according to any one of Claims 1 to 7, characterised in that the holding elements (4) can be adjusted horizontally in the sense of an X-Y coordinate control system and relative to one another on an adjustment shaft (11) of which the position can be varied orthogonally relative to its adjustment direction optionally by a further adjustment shaft (11).

10. Device according to Claim 8 or Claim 9, characterised in that the spindle (12) can be actuated by means of a hand wheel (13) or the like manually or preferably by an NC control system by means of a servo motor.

11. Device according to any one of Claims 8 to 12, characterised in that the adjustment - which is almost automatic - is brought about by a slide block (15) which is associated with the spindle (12) and which can be brought into engagement with an engaging means (14) of the holding element (4); and in that the slide block (15) or the spindle (12) supporting the slide block (15) is associated with the upright at the point at which the workpiece (1) can be brought into engagement with the holding device (3).

12. Device according to any one of Claims 1 to 11, characterised in that the holding elements (4) are in the form of a hole gripper (4).

13. Device according to Claim 12, characterised in that the hole gripper (4) comprises a resilient wall (17) which preferably tapers conically towards the free end (16), which is preferably made of rubber, and of which the diameter is increased hydraulically or pneumatically upon actuation.

14. Device according to any one of Claims 1 to 20, characterised in that the upright (2) is constructed so as to be horizontally movable.

15. Device according to Claim 12 and optionally according to Claim 13 or 14, characterised in that the perforated grippers (4) are used to engage corresponding recesses (19) in foundry cores and moulds, in particular in base and water jacket cores.

## Revendications

1. Dispositif de transport de noyaux et moules de coulée (1), avec une cage (2) et avec au moins un dispositif de retenue (3) porté par la cage (2) et recevant le noyau de coulée, le dispositif de retenue (3) présentant lui-même un élément de retenue (4) qui peut être mis en engagement avec le noyau de coulée (1),
caractérisé par le fait que le dispositif de retenue peut être mis en rotation continue autour d'un axe vertical (5), de telle sorte que l'élément de retenue (4) décrit un trajet en substance en forme d'arc de cercle et que le dispositif de retenue (3) peut être tourné autour d'un axe horizontal(6), de préférence d'un angle de 180°, de sorte que l'élément de retenue (4) peut dans toute position horizontale être pivoté depuis une position orientée vers le haut jusqu'à une position orientée vers le bas.

2. Dispositif suivant la revendication 1, caractérisé par le fait qu'au moins deux dispositifs de retenue (3) sont prévus et par le fait que les dispositifs de retenue (3) sont disposés l'un en face de l'autre et à des distances égales de l'axe de rotation vertical.

3. Dispositif suivant la revendication 1 ou la revendication 2, caractérisé par le fait que chaque dispositif de retenue (3) présente au moins deux et de préférence plusieurs éléments de retenue (4).

4. Dispositif suivant l'une quelconque des revendications de 1 à 3, caractérisé par le fait que le mouvement de rotation et/ou le mouvement de pivotement du dispositif de retenue (3) sont réalisés chacun au moyen d'un moteur d'entraînement électrique.

5. Dispositif suivant l'une quelconque des revendications de 1 à 3, caractérisé par le fait que le mouvement de rotation et/ou le mouvement de pivotement du dispositif de retenue (3) sont chacun réalisés au moyen d'une commande hydraulique, et par le fait que d'une part le dispositif de retenue (3) en ce qui concerne la rotation autour d'un axe vertical (5) et d'autre part les éléments de retenue (4) en ce qui concerne un mouvement de pivotement autour d'un axe horizontal (6) sont, au moyen d'un distributeur rotatif (7, 8) pour le fluide de pression, articulés directement ou indirectement sur la cage (2).

6. Dispositif suivant l'une quelconque des revendications de 1 à 5, caractérisé par le fait que les éléments de retenue (4) pour la fixation de la pièce de travail (1) sont actionnés par voie pneumatique ou hydraulique, par le fait que l'alimentation des éléments de retenue (4) en fluide de pression a également lieu par l'intermédiaire du distributeur rotatif (7, 8) et par le fait que les éléments de retenue (4) sont par l'intermédiaire de moyens de commande (9) commandés de préférence en fonction de la position rotative.

7. Dispositif suivant la revendication 6, caractérisé par le fait que le moyen de commande (9) a la forme d'un disque à cames fixe et que le disque à cames (9) actionne directement une valve hydraulique ou pneumatique (10).

8. Dispositif suivant l'une quelconque des revendications de 1 à 7, caractérisé par le fait que les éléments de retenue (4) sont réglables horizontalement l'un par rapport à l'autre sur un arbre de réglage (11) ou similaire par l'intermédiaire d'une broche (12) associée à la cage (2).

9. Dispositif suivant l'une quelconque des revendications de 1 à 7, caractérisé par le fait que les éléments de retenue (4) sont, sur un arbre de réglage (11), dont la position peut être modifiée de manière orthogonale par rapport à sa direction de réglage le cas échéant par l'intermédiaire d'un autre arbre de réglage (11), réglables horizontalement l'un par rapport à l'autre dans le sens d'une commande de coordonnées X-Y .

10. Dispositif suivant la revendication 8 ou la revendication 9, caractérisé par le fait que la broche (12) peut être commandée manuellement par l'intermédiaire d'une manette (13) ou similaire ou de préférence par l'intermédiaire d'une commande NC au moyen d'un servo-moteur.

11. Dispositif suivant l'une quelconque des revendications de 1 à 5, caractérisé par le fait que le réglage a lieu de manière quasi automatique par l'intermédiaire d'une coulisse (15) associée à la broche (12), coulisse (15) qui peut être mise en engagement avec un moyen d'engagement (14) de l'élément de retenue (4), et par le fait que la coulisse (15) ou la broche (12) portant la coulisse (15) est associée à la cage (2) à l'endroit où la pièce de travail (1) peut être mise en engagement avec le dispositif de retenue (3).

12. Dispositif suivant l'une quelconque des revendications de 1 à 11, caractérisé par le fait que les éléments de retenue (4) ont la forme de dispositifs de préhension à trou (4).

13. Dispositif suivant la revendication 12, caractérisé par le fait que le dispositif de préhension à trou (4) présente une paroi élastique (17) de préférence en caoutchouc, paroi qui de préférence s'amincit en cône en direction de l'extrémité libre (16), paroi (17) dont le diamètre est agrandi par voie hydraulique oui pneumatique lors de la manoeuvre.

14. Dispositif suivant l'une quelconque des revendications de 1 à 13, caractérisé par le fait que la cage (2) est mobile horizontalement.

15. Dispositif suivant la revendication 12 et le cas échéant 13 ou 14, caractérisé par le fait que les dispositifs de préhension à trou (4) servent à l'engagement dans des évidements correspondants (17) dans des noyaux et moules de fonderie, notamment dans des noyaux de sole et des noyaux de chemise d'eau.
